# EUROPEAN PATENT APPLICATION

(11) **EP 4 783 387 A1**
(43) Date of publication of application: **29.07.2026**
(21) Application number: 25153802.1
(22) Date of filing: 24.01.2025
(51) Int. Cl.: H02G 1/12, H01R 43/28

(54) **CLAMPING UNIT FOR A CABLE PREPARATION TOOL AND CABLE PREPARATION TOOL**

(71) Applicant: TE Connectivity Solutions GmbH, 8200 Schaffhausen (CH)
(72) Inventor: SIMONSOHN, Thilo, 8200 Schaffhausen (CH); BIAGINI, Veronica, 8200 Schaffhausen (CH); BOLOGNESI, Paolo, 8200 Schaffhausen (CH)
(74) Representative: Grünecker Patent- und Rechtsanwälte PartG mbB

(57) **Abstract**

The present invention relates to a clamping unit for a cable preparation tool and to a corresponding cable preparation tool. Such cable preparation tools are for instance used for stripping various layers from medium voltage (MV) or high voltage (HV) cables. A clamping unit (100) for a cable preparation tool (200) is operable to encompass a cable (102) having a longitudinal axis (112) and comprises a first support element (108) for axially supporting the cable (102) from a first direction across the longitudinal axis (112), a second support element (110) for axially supporting the cable (102) from a second direction across the longitudinal axis (112), a central unit (116) being interconnected with the first support element (108) and the second support element (110), and a linear slide bearing unit, the slide bearing unit connecting the first support element (108) and the second support element (110) movably to the central unit (116), so that they can be moved in parallel and simultaneously to change their distance with respect to the central unit (116).

## Description

The present invention relates to a clamping unit for a cable preparation tool and to a corresponding cable preparation tool. Such cable preparation tools are for instance used for stripping various layers from medium voltage (MV) or high voltage (HV) cables.

For the purposes of the present disclosure, the classification of medium voltage (MV) and high voltage (HV) for power cables is based on the voltage levels they are designed to carry. In particular, MV relates to power cables designed to operate at voltage levels typically between 1 kV and 35 kV. Typical applications are distribution networks (e.g., from substations to smaller transformers or industrial sites), industrial plants and large commercial facilities, and renewable energy systems (e.g., wind and solar farms).

HV relates to power cables designed to operate at voltage levels typically above 35 kV, often up to 230 kV or higher in some classifications. Beyond this, cables may fall into the extra-high voltage (EHV) category, typically starting at 230 kV. Applications are for instance transmission networks (e.g., carrying electricity over long distances from generation stations to substations), high-demand industrial applications, and the interconnection of power grids.

Stripping MV and HV cables is time-consuming. It also requires skills and experience of the cable jointers. Three stripping operations are typically to be done: stripping of the cable jacket, the semicon layer and the insulation.

In the context of the present disclosure, the term "semicon" refers to semiconducting layers that are used as part of the cable insulation system. These layers are typically made from materials that are partially conductive (semiconductors) and serve specific purposes in high-voltage and medium-voltage power cables.

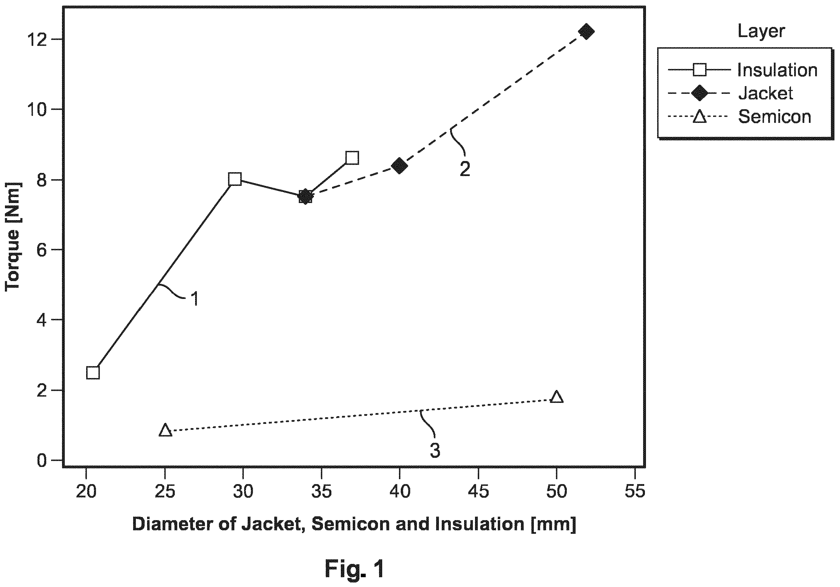

The stripping lengths vary, for typical MV inline joints the jacket is to be stripped by about 500 mm on one cable and the other by about 200 mm. The semicon is to be stripped by 150 mm and the insulation by e.g. 60 mm. Due to the wall thickness to be cut, the material, and the cable temperature as well as due to the diameter where the layers are located relative to the centerline of the cable the torque to be applied to the tool varies. Fig. 1 illustrates the maximum torque (in Nm) needed to strip the cable jacket, insulation, and semicon, respectively, as a function of the diameter (in mm) measured at room temperature.

The pitch size (increment) for stripping the cable jacket and insulation are in the magnitude of 10 to 30 mm. As a result, for stripping a typical jacket of 200 mm 10 to 20 turns are required. For the insulation it is only 5 to 10 turns. As a speed, one turn per second is done in manual operation.

For stripping the semicon, the pitch size is in the range of 2 to 3 mm. Thus, about 50 to 60 turns are required. Here, 2 turns per second would be a preferable speed.

In particular, when cable stripping tools are motorized e.g. by using a handheld power tool, the operator has to hold them with one or two handles. Running the tools with a speed of at least one turn per second, the centricity of the tool clamped around the cable becomes important. This is especially true for stripping the semicon layer with 2 turns per second.

Consequently, there is still a need for design principles that enable clamping around cables with maximized centricity. Further, there is a need for a clamping unit and a cable preparation tool which are light weight and easy to handle, allowing for a fast and accurate clamping on the cable and accurate cable stripping process.

This object is solved by the subject matter of the independent claims. Advantageous embodiments of the present invention are the subject matter of the dependent claims.

The present disclosure is based on the idea that a clamping with optimized centricity can be achieved with a clamping unit that has two slidable support elements which can be moved simultaneously towards each other and away from each other, in order to be fitted around a cable to be stripped.

The present disclosure provides a clamping unit for a cable preparation tool, the clamping unit encompassing the cable having a longitudinal axis, the clamping unit comprising a first support element for axially supporting a cable from a first direction across the longitudinal axis, a second support element for axially supporting the cable from a second direction across the longitudinal axis, and a central unit being interconnected with the first support element and the second support element.

A linear slide bearing unit connects the first support element and the second support element movably to the central unit, so that they can be moved in parallel and simultaneously to change their distance with respect to the central unit.

According to a further example of the present disclosure, the linear slide bearing unit comprises two linear slide bearing shafts interconnecting the first support element, the second support element, and the central unit.

According to a further example of the present disclosure, the slide bearing unit comprises a drive element for moving the first support element und the second support element simultaneously across the longitudinal axis.

According to a further example of the present disclosure, the first bearing shaft comprises a first thread engaging with the first support element and a second thread engaging with the second support element.

According to a further example of the present disclosure, the first bearing shaft is rotatable around its longitudinal shaft axis and can be actuated by rotating a nut attached to one end of the first bearing shaft.

According to a further example of the present disclosure, the first bearing shaft is rotatable around its longitudinal shaft axis and can be actuated via a gear set or a worm drive.

According to a further example of the present disclosure, the first support element and/or the second support element comprise at least one roller rotatable around a roller axis extending along the longitudinal axis of the cable for supporting the cable.

According to a further example of the present disclosure, the first support element and/or the second support element comprise a plurality of rollers distributed around the longitudinal axis of the cable.

According to a further example of the present disclosure, at least one of the plurality of rollers at the first support element and/or the second support element is axially off-set from the other rollers at the same support element.

According to a further example of the present disclosure, the plurality of rollers on the first and/or second support element are arranged in pairs of rollers distanced apart in an axial direction, each pair of rollers being arranged at the same radial position with respect to the longitudinal axis of the cable.

According to a further example of the present disclosure, at one of the first or second support element at least one pair of rollers has a larger axial distance from each other than the other pairs of rollers.

The present disclosure further relates to a cable preparation tool comprising a cutting unit and a clamping unit according to the present disclosure, the cable preparation tool further comprising an impellent unit for impelling the cutting unit of the cable preparation tool to rotate around the longitudinal axis of the cable.

According to a further example of the present disclosure, the impellent unit comprises an electric motor.

According to a further example of the present disclosure, the electric motor is arranged on a base unit, which in operation is not rotating around the cable, and wherein the cutting unit is connected to the base unit by means of a transmission unit.

According to a further example of the present disclosure, the electric motor has a drive shaft, which is rotating during operation, and wherein the electric motor is oriented at the base unit so that the drive shaft extends across to the longitudinal axis of the cable.

The accompanying drawings are incorporated into and form a part of the specification to illustrate several embodiments of the present invention. These drawings together with the description serve to explain the principles of the invention. The drawings are merely for the purpose of illustrating the preferred and alternative examples of how the invention can be made and used and are not to be construed as limiting the invention to only the illustrated and described embodiments. Furthermore, several aspects of the embodiments may form-individually or in different combinations-solutions according to the present invention. Further features and advantages will become apparent from the following more particular description of the various embodiments of the invention, as illustrated in the accompanying drawings, in which like references refer to like elements, and wherein:
FIG. 1 shows a maximum torque occurring when stripping power cable jackets, semicon, and insulation as a function of the diameter;
FIG. 2 illustrates the principle of a chuck with three clamping elements;
FIG. 3 illustrates the principle of a chuck with four clamping elements;
FIG. 4 shows a schematic cross sectional view of the clamping principle according to a first example;
FIG. 5 shows a schematic cross sectional view of the clamping principle according to another example;
FIG. 6 shows a schematic cross sectional view of the clamping principle according to another example;
FIG. 7 shows a schematic cross sectional view of the clamping principle according to another example;
FIG. 8 shows a schematic cross sectional view of a clamping unit according to a further example;
FIG. 9 shows a detail of Figure 8;
FIG. 10 shows a schematic cross sectional view of the detail shown in Figure 9;
FIG. 11 shows a schematic perspective view of an actuation means according to a further example;
FIG. 12 shows a schematic perspective view of an actuation means according to a further example;
FIG. 13 shows a schematic cross sectional view of a clamping unit according to a further example;
FIG. 14 illustrates the effect of the cable diameter on the required wheel arrangement;
FIG. 15 shows a schematic perspective view of a first support element of a clamping unit according to a further example;
FIG. 16 shows a rotated perspective view of the first support element shown in Figure 15;
FIG. 17 shows a schematic perspective view of a second support element of a clamping unit according to a further example;
FIG. 18 shows a schematic perspective view of a cable preparation tool according to an example of the present disclosure;
FIG. 19 shows a rotated perspective view of the cable preparation tool of Figure 18.

The present invention will now be described in more detail with reference to the Figures. Turning first to Figure 1, there is shown the maximum torque occurring when stripping power cable jackets, semicon, and insulation, respectively, as a function of the outer diameter. As shown in Figure 1, the maximum torque that has to be applied by a cutting unit removing a particular layer from a cable firstly depends on the material (power cable jackets, semicon, and insulation, respectively) and secondly depends on the diameter as well as on the layer thickness, the cable temperature, the cutting speed, and the steepness of cutting angle. Curve 1 shows that for the insulation layer, which usually is the innermost layer electrically insulating the cable, the maximum torque is strongly dependent on the diameter of the insulation layer. For a diameter of 20 mm, the torque is around 2.5 Nm, while it is around 8.5 Nm for a diameter of about 36 mm. Curve 1 is essentially continued by curve 2. Curve 2 represents the maximum torque for the outer jacket in a diameter range between 34 mm and 51 mm. The maximum torque according to curve 2 is in a range between 8 and 12.5 Nm.

Curve 3 shows the maximum torque that has to be applied by a cutting unit removing a semicon layer. The maximum torque is firstly much less than for the insulation and jacket layers. Secondly, the dependence on the outer diameter is much less. As can be derived from curve 3, the maximum torque is in a range between 0.5 Nm and 1.5 Nm for a diameter range between 25 mm and 50 mm.

When dealing with these amounts and wide ranges of torques and diameters, it is important that any cable preparation tool is supported on a cable to be stripped in a particularly well-centered manner, while the tool (or at least the cutting unit) is rotatable around the longitudinal axis of the cable. The proposed concepts of this disclosure are based on the approach of having wheels, also referred to as rollers, and no static surfaces which are mounted into tool assemblies which allow maximum centricity of the cable.

Multiple options for the number of wheels can be used, namely three single wheels, four or more single wheels, three pairs of wheels, the wheels of each pair arranged side by side in an axial or radial direction, or four or more pairs of wheels.

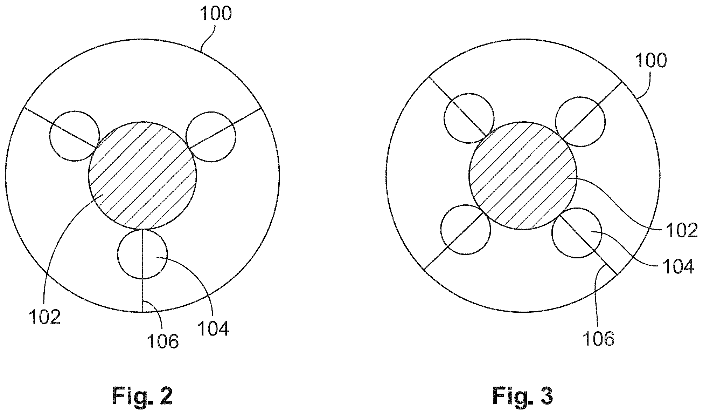

As this is generally known, a mechanism to clamp a cutting unit around a cable 100 can be based on the chuck principle. Figures 2 and 3 schematically illustrate this principle of attaching a clamping unit 100 around a cable 102, according to which the wheels (or rollers) 104 or pairs of wheels are fixed to individual holder parts 106. These holder parts 106 are moved independently from each other in a uniform (and majorly) radial direction. There may be three, four, or any higher number of holder parts 106 with respective wheels 104 or pairs of wheels 104 arranged at the inner end of each holder part 106. This conventional chuck configuration has the advantage of ensuring a very high level of centricity. However, it also has the disadvantage of a high complexity and weight because at least three moveable holder parts 106 including respective drive mechanisms (not shown in Figures 2 and 3) have to be provided.

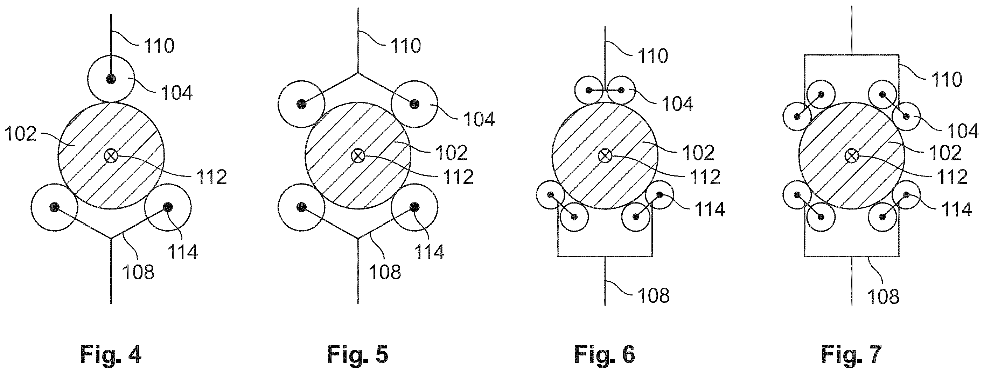

These problems can be overcome by the improved design according to the present disclosure. According to this design concept, a clamping unit is provided which has only two parts which are operable to move parallel and in radial direction. In the following, these two movable parts will be referred to as first support element and second support element, according to an advantageous example also as first and second plates. Figures 4 to 7 illustrate the design concept according to the present disclosure in a highly abstracted and simplified representation. The wheels 104 of any number are fixed to these two support elements 108, 110. This leads to arrangements of e.g. two-plus-one or two-plus-two wheels (or pairs of wheels).

In particular, Figure 4 shows an example, in which the first support element 108 has two wheels 104 and the second support element 110 has only one wheel 104. This configuration has the fewest components and may therefore be constructed with the least weight. Essentially, the configuration of Figure 4 provides a three-point support similar to the three-point chuck configuration of Figure 2, with the difference that only two moveable support elements are involved.

It should be noted that in all cross-sectional views the longitudinal axis of the cable 102 extends into the plane of projection. Each of the wheels 104 is rotatable around a wheel axis 114 which extends along the longitudinal axis 112 of the cable 102. Thus, the cable 102 is supported in a radial direction, while the first and second support elements 108, 110 may still rotate around the longitudinal axis 112 of the cable 102.

Figure 5 shows an example, in which each of the first and second support elements 108, 110 are equipped with two wheels 104. This configuration has the advantage of a particular symmetrical force transmission between the cable 102 and the clamping unit. It also has the advantage that the cable is less likely to slip out of the clamping units between the wheels.

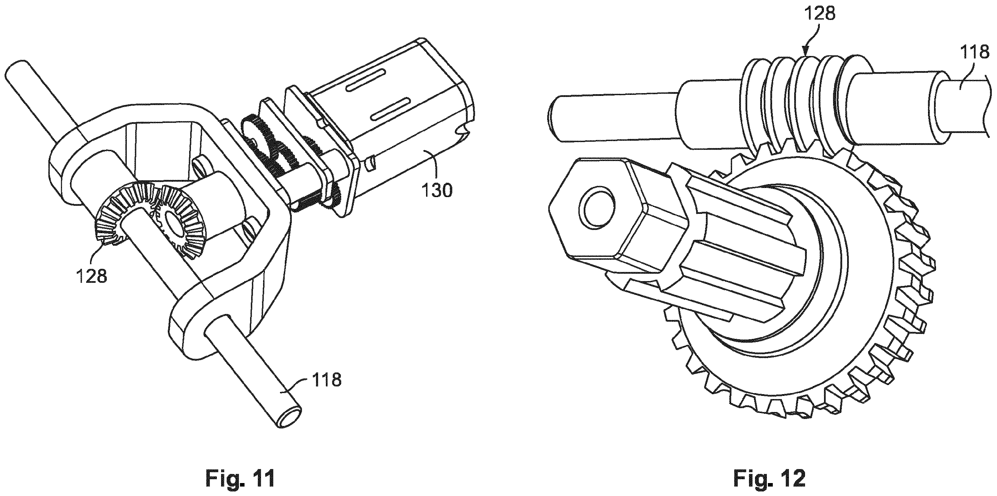

As mentioned, not only single wheels 104, but also pairs of wheels 104 can be used as this is shown in Figures 6 and 7. In these Figures, the two wheels 104 of each pair are arranged side by side around the circumference of the cable 102. It will become apparent from Figures 12 to 15 that the two wheels of each pair of wheels may also be arranged side by side along the longitudinal axis of the cable. This latter construction has the advantage that the clamping unit has an improved stability in an axial direction and tilting and possible jamming of the clamping unit can be avoided. It is also less impacted by irregularities of the cable surface such as deformations or particles laying on the surface. Furthermore, not only pairs of wheels, i.e. two wheels, can be arranged side by side, but also three or more.

The clamping of the cable preparation tool around the cable can be done in different ways. Attaching the first and second support elements to the cable may firstly be performed manually by e.g. screwing or twisting a threaded bolt or by pushing them together with ratchet elements to fix. The clamping can also be done electrically with one or multiple motors or with electrically actuated spools.

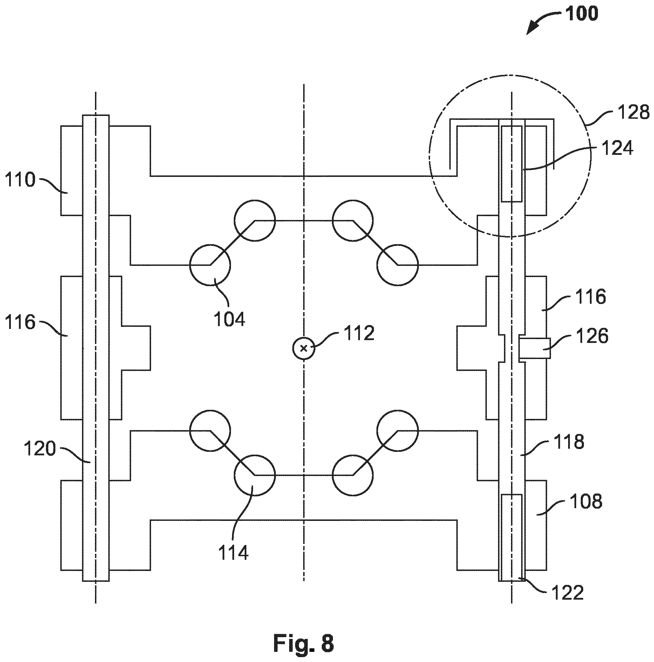

Figure 8 illustrates a first advantageous example of a clamping unit 100 according to the present disclosure. The clamping unit 100 comprises a central unit 116, a first support element 108, and a second support element 110.

It should be noted that Figure 8 only shows the bearing parts which interconnect the central unit 116 with the first support element 108 and the second support element 110. The first support element 108 and the second support element 110 each comprise a plurality of wheels 104, which may also be referred to as rollers. A central axis 112 extending into the projection plane is also the longitudinal axis of a cable when the clamping unit 100 is in operation. Each of the wheels 104 is rotatable around a wheel axis 114 extending essentially or exactly in the same direction as the central axis 112. The wheel axis 114 may also include an angle with the central axis 112.

Advantageously, the clamping unit 100 comprises a slide bearing unit with two linear slide bearing shafts 118, 120 interconnecting the first support element 108, the second support element 110, and the central unit 116. For actuating the slide bearing unit, the first slide bearing shaft 118 may comprise a first thread 122 and a second thread 124 engaging with the first and second support elements 108, 110. Of course, also both slide bearing shafts 118, 120 may be provided with respective threads. The first thread 122 and the second thread 124 have opposite senses of rotation, so that with each turn of the slide bearing shaft (or spindle) 118 the first and second support elements 108, 110 move in opposite directions, i. e. towards each other or away from each other.

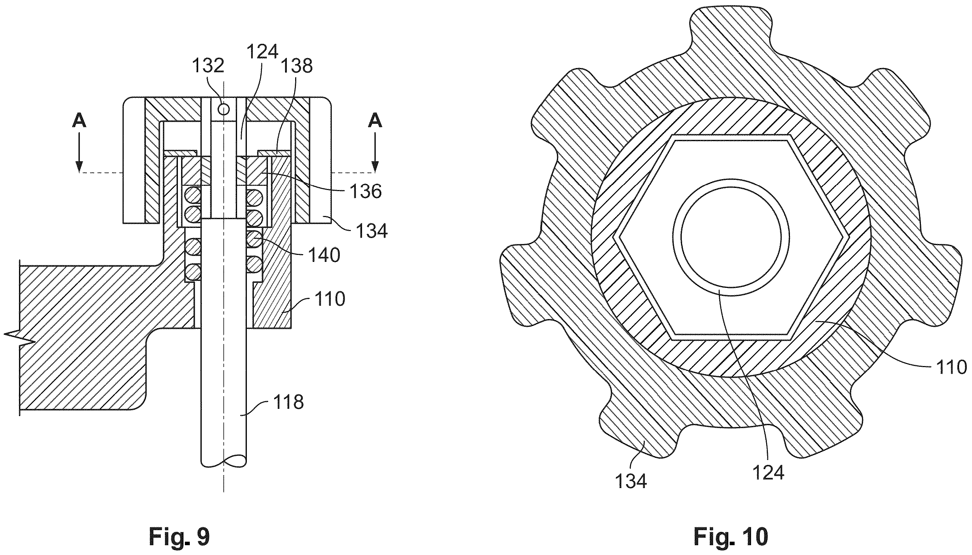

Details of the actuation mechanism will be explained below with reference to Figures 9 and 10.

By rotating the first slide bearing shaft 118 around its longitudinal axis, the first support element 108 and the second support element 110 move in a direction across to the central axis 112, either towards each other or away from each other. The first slide bearing shaft 118 may therefore be referred to as a spindle. Thus, the clamping unit 100 may be adapted to a particular cable diameter so that depending on the actual cable diameter some of the wheels 104 are in touch with the surface of the cable to be stripped.

The first and second slide bearing shafts 118, 120 are guided in respective bearing bushings 121 arranged at the first and second support elements 108, 110 and at the central unit 116. Furthermore, the bearing bushing 121 of the central unit 116 has at least one fixing element 126 for securing the slide bearing shaft 118 to the central unit 116. The fixing element 126 may for instance comprise a groove at the slide bearing shaft and a bolt secured to the central unit 116. Of course, a similar fixing element 126 may also be arranged at the bushing of the central unit 116 which holds the second slide bearing shaft 120.

As can be seen from the detail views of Figures 9 and 10, the second thread 124 is connected to a cap 134 by means of a bolt 132. When the cap 134 is manually turned by an operator, the thread 124 rotates and moves a transmission ring 136 upwards or downwards. The transmission ring 136 is pressed against an upper stop 138 arranged at the second support element 110 by a compression spring 140. A corresponding arrangement (without the cap 134) connects the first thread 122 to the first support element 108.

One or more motors can be used with this two-plate design of the tool. Either one motor turns a spindle with threads of opposite senses of rotation on one side of the tool, while the other side has a bolt only used for proper parallel orientation of the plates having a sliding fit. This design concept which does the adjustment to the cable diameter by turning one spindle can also be used for a fully manual tool.

Turning the spindle 118 can be done in multiple ways besides turning a knob at the top as shown in Fig. 8 to 10. For instance, a socket, through which the spindle 118 can be actuated, may be arranged at the spindle 118. The socket may be located close to the central unit 116 (the socket is not shown in the Figures). In order to limit the overall space of the clamping unit 100, the outer diameter of a socket fixed to the spindle and being located in the center plate has to have a smaller outer diameter than the turning knob located at the top. Instead of a socket, a gear can be fixed to the spindle. This is turned by a second gear which is attached to a shaft which is majorly horizontally oriented. Alternative actuation means 128 to rotate the spindle 118 are located e.g. in the middle area of the tool. For instance, two gears with 45° angle or a worm drive may be used. Figure 11 illustrates schematically a 45° angled gear drive. Figure 12 illustrates a worm drive as the actuation means 128. The rotational movement can be done manually or with an actuator (e.g. motor 130).

A further option (not shown in the Figures) is to provide two motors, each of them is moving one of the support elements (also called plates). The motors need to be sufficiently synchronized. Having only one spindle allows to manually clamp the tool around the cable much easier and more precisely. in case there are two independent spindles, the manual clamping of the tool with accurate centering becomes very difficult.

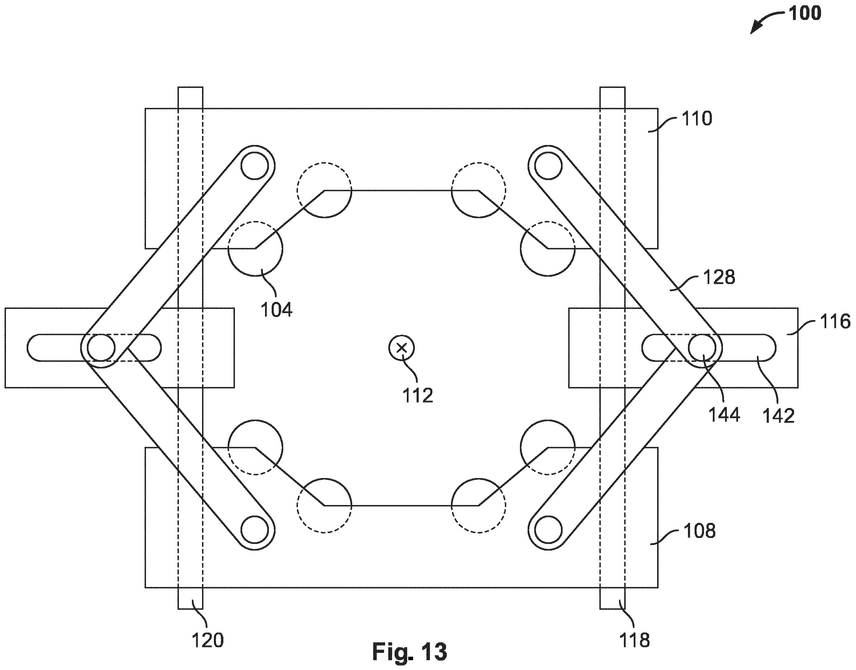

Fig. 13 shows a further concept of a two-plate design of the clamping unit. Instead of the first and second threads 122, 124 of Figures 8 to 10, the actuation means 128 comprises folding grille that interconnects the first and second support elements 108, 110 with the central unit 116. The central unit 116 comprises elongated holes 142 on either side and sliding means 144 which are linked to the first and second support elements 108, 110. Any movement of one of the support elements (or plates) relative to the central unit 116 automatically positions the respective other support element such that the cable is centered between both support elements. The actuation may be performed by manually sliding the sliding means 144 inside the elongated hole 142. Alternatively, also any of the previously described rotational actuation of one of the slide bearing shafts 118, 120 may be employed to move only one of the support elements 108, 110, while the other support element follows this movement due to the folding grille connection.

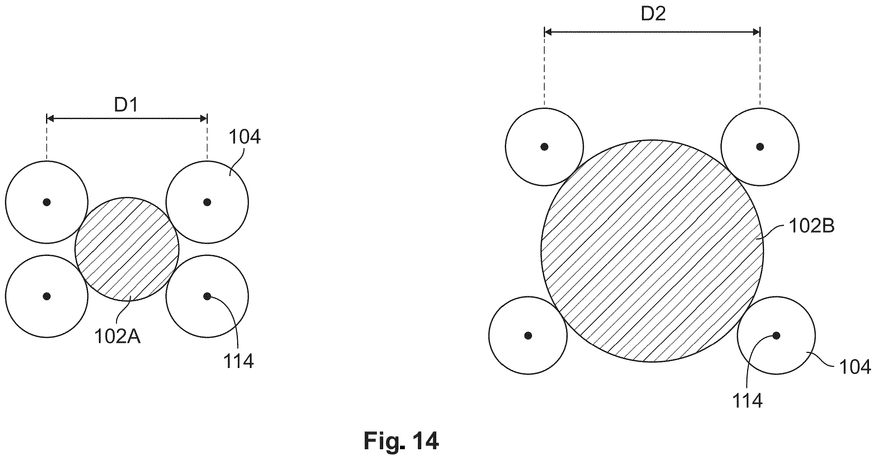

An important aspect of the support elements 108, 110 described above can be seen in the arrangement of the wheels (or rollers) 102 that establish the direct contact to the surface of the cable 102. Fig. 14 shows in a schematic sectional view how the distance, namely the wheel base D, of the wheels that are in contact with the outer surface of the cable is different for different cable diameters. In particular, as cable 102A has a lower diameter than cable 102B, the respective wheel base D1 has to be shorter than the wheel base D2 of the thicker cable, i.e. D1 <D2.

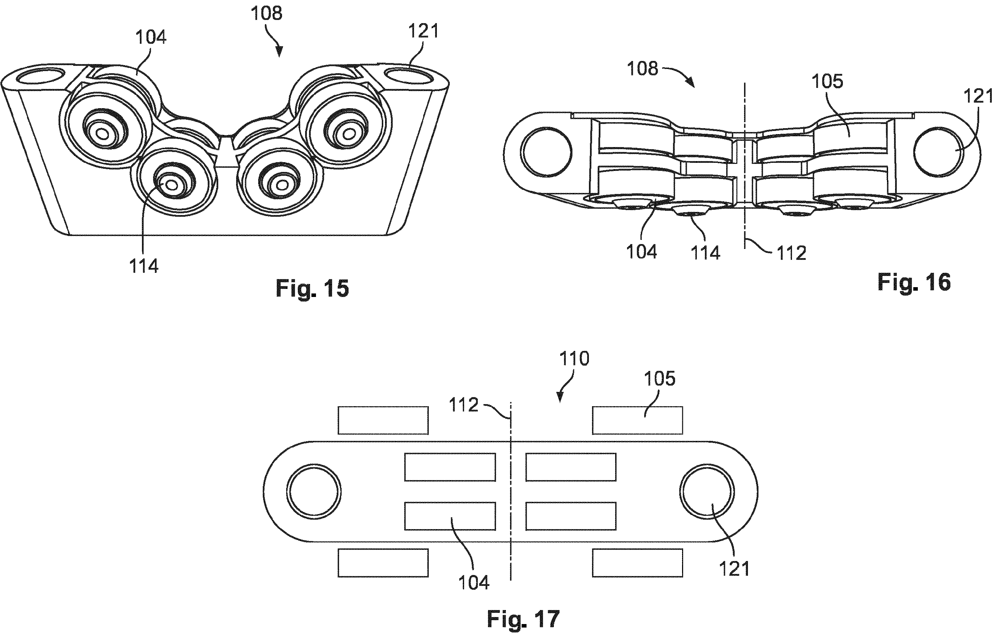

Figures 15 to 17 illustrate particular examples of the first support element 108 and the second support element 110, respectively. It should be noted that the position of the upper and lower (first and second) support elements are of course interchangeable.

As can be seen from Figure 15 and 16, the first support element 108 is provided with four pairs of wheels 104. Each of the wheels is rotatable around a wheel axis that extends along the central axis 112. The wheels 104 may for instance be supported by ball bearings in order to facilitate rotation.

In order to allow the first and second support elements 108, 110 to approach each other close enough for encompassing low diameter cables, it is proposed that the peripheral pairs of wheels 105 of the second support element 110 have a different position than the peripheral wheels 105 of the first support element 108, so that the peripheral wheels 105 do not touch. In the arrangement shown in Figure 17, at the second support element 110, the axial distance of the peripheral wheels 105 from each other is chosen different (here larger) than the axial distance of the two wheels of the peripheral wheels 105 of the first support element 108.

In summary, the centering of the tool relative to the cable is particularly important once a motor is attached to the tool which spins it while the jointer holds the tool with one or two hands. The higher the number of revolutions is, the more important is a proper centering.

This is why the concept of a two-plate design with 2 + 1 wheels or pairs of wheels (see Fig. 4 and 6) is less favored. Due to the targeted range taking to cover multiple diameters of cables, the clamping unit does not create a good enough centric positioning of cables of all diameters. If the lower plate has two wheels or two pairs of wheels, the cable's position is higher or lower depending on the cable diameter. This basic geometrical effect can only be overcome when applying a symmetrical design ("2 + 2" design concept according to Figures 5 and 7).

Another option to overcome this effect is to change this distance between the two wheels depending on the actual cable diameter. This could be done with a motoric device and/or manually once both wheels are preferably connected by a spindle with areas of opposite sense of rotation. If there is a sensing of the overall cable diameter, the motor(s) to change the distance between the two wheels can run automatically.

Further criteria to select among the concepts and designs of the cable clamping are the overall weight, the robustness in outdoor environment, and the cost. In some cases, the manual clamping may be favored due to overall tool cost, or because motoric clamping and spinning of the tool is not seen as an option for harsh environments.

A further aspect to be considered is the elasticity of the clamping.

It is of advantage to build-in some elasticity in the clamping of the clamping unit on the cable. This is to deal with ovality of the layer to the stripped and also to deal with diameter tolerances of the cable along the stripping area length. The elasticity can be achieved by building-in a spring system (see for instance Fig. 9) or by using design elements which bend once the clamping happens, or by using materials which allow for elastic deformation. If using motoric systems for clamping and having proper sensing, the adjustment to cable ovality of diameter changes over length can be done automatically without former elastic elements.

A further aspect is the locking of the clamping unit at the cable. The locking can be done through tightening elements such as levers or screwing nuts. It can also be achieved by taking benefit from the self-blocking property of spindles which are used to execute the closing of the tool around a cable (compare Figures 11 and 12). When using motors, the locking can be achieved by the motors with or without an additional brake.

The size of the wheels, i.e. the diameter and the width of the wheels may be selected dependent of the overall size of the cables to be stripped. The dimensions may for instance comprise a diameter of 19 mm and a width 6 mm).

A further aspect of the clamping unit relates to the positioning of wheels in an axial direction. A downside of the 2+2 arrangements using single or double wheels is to cover a wide range of cable diameters. The spacing between the outer wheels has to be above a certain limit. This is to ensure that cables of large diameter can be properly and robustly clamped. If not, this can lead to an unstable stripping process with irregular surface shapes or residues left. In some cases the cable may not be clamped strongly enough and jump out.

An improvement is to use two pairs of wheels in each support element. Here the inner pair of wheels are for clamping smaller cables, whereas the outer pair of wheels carry larger size cables. But when the support elements of the clamping unit are moved towards each other, the outer wheels of the two support elements are getting into physical contact at a certain state, so that only cables above a certain limit can be clamped. Unfortunately, this limit is too high for proper use in the field. Many customers prefer tools which cover a wider range of cable diameters starting from very small ones.

One option to avoid switching to a 2 + 1 arrangement and to keep the concept of 2 + 2 which allows symmetric cable clamping is to have the outer wheels of one of the plates spaced apart in axial direction. This is done to a level that the pair of wheels of the other plate fit between them. Seen in axial direction one wheel is in front and the other behind the pair of wheels of the other plate (see Fig. 17). Other arrangements are possible as well, e.g. that one wheel of one plate fits between the two wheels of the other plate and the second wheel is located behind or in front. In order to limit the overall width of the tool following this concept it is possible to reduce the width of especially the wheels which are spaced apart in axial direction and especially those being on the opposite side of the tool where the cutting blade is not positioned.

Another option is to have the outer wheels of one of the support elements removable. This means for small cables they are not attached to the tool. They would be quickly and easily attached only if cables are above a certain minimum diameter are to be stripped. This can be facilitated e.g. by having these wheels mounted on a plate which can be attached to the tool by sliding into a guiding (dove tail) groove, finally fixed by a snap-fit or screwing connection. Alternatively, the support element has robust guiding rods to engage with the tool body. The fixing may be done by means of form-fit or force-fit elements.

Another option is to mount the wheels onto a plate which is linked to the support element through a hinge. This plate is flipped away for stripping small size cables and it is flipped into position and locked for stripping larger size cables.

Another option for relocating the outer wheels of one of the plates when stripping small size cables is to mount the wheels such that, when the tool is closed below a certain limit, they are moved away either upwards or away in any direction. This can be achieved e.g. if the other support element has bolts with diagonal cuts at their front-end forming wedges. Once the clamping unit starts to be closed around small size cables, the wedges of the bolts push the holder of the outer wheels of the other support element away. Using this concept eliminates the need for the cable jointer to actively remove or relocate the outer wheels when stripping small size cables. This may get forgotten resulting in improper cable stripping results.

There are several possibilities of enhancing the stability of the clamping unit when spinning around cables.

As mentioned above and as generally known, the wheels with a width of 6 mm are spaced in axial direction only with a distance of about 5 mm. This allows for executing stripping cutback dimensions of 25 mm at the semicon with shield wires being folded back. In most cases of cable stripping, such dimensions are not required, as 40 mm is a widely used stripping dimension.

In order to increase stable spinning of the clamping unit and the cable preparation tool, a desirable example is to add a third row of wheels (seen in axial direction), especially for the outer set of wheels which come into contact for stripping larger size cables. In case 25 mm stripping dimensions are required, this third row of wheels can be disassembled before starting the stripping or during stripping when coming close to the end position or they are mounted in a way that they can be moved e.g. by attaching them with a hinge which would allow flipping away shortly before the end.

This concept of removal of wheels can also be applied with some of the second wheels towards the end of the stripping. In this case the process is running stable with two sets of wheels from both plates and only towards the end of the stripping process the pair of wheels being located furthest on the backside of the clamping unit would be removed for finishing the stripping task. This may be indicated when stripping dimensions are below 40 mm and cutting torques are relatively low, e.g. below 5 Nm.

Further, it is an option to use the second (or third) row of wheels located at the backside of the clamping unit to limit the length that the tool is stripping. For instance, this set of wheels can be attached to the tool giving a fixed length or it can be freely moved in axial direction to adjust stripping length. An easily visible scale may allow the jointer to properly set the correct dimensions.

To avoid an improper shape of the edge line of the semicon it may be advantageous to avoid direct contact of the wheels with the folded screen wires as the wires are folded back randomly. By using an additional part which covers the wheels and has a smooth tapered or rounded outer shape this can be achieved. Once this part comes into contact with the wires it may result in a smooth, non-wavy edge line of the semicon. A further option is to fix this additional part which may be a thin blank or a short ring to the cable first covering the folded wires and having a fixed thickness. This would enable the tool to abut against this part still creating a sharp, non-wavy edge line of the semicon.

The second (or third) row of wheels can further be used to increase overall stability of the tool.

In case the cable preparation tool comprising the clamping unit of the present disclosure is used to execute stripping operations with high torques (e.g. above 3 Nm), the spacing between the row of wheels advantageously is above 10 mm. Current tools are designed for that purpose having a fixed spacing of e.g. 60 mm and above. These tools can not be used for stripping the semicon layer as in most cases the left-over length of semicon is 40 mm or in some cases only 25 mm. If a universal stripping tool has to be designed it, is an option to add at least one additional row of wheels. It can be located e.g. 50 mm away from the rows of wheels of the tool used for stripping the semicon layer. This additional row(s) of wheels may be easily attachable to the tool for according stripping operations.

When using the clamping unit with a cable preparation tool, the location of the cutting blade at the cable stripping tool has to be taken into consideration. Tools typically have one cutting blade. It is held in a blade holder unit which allows radial movement of the blade. The blade holder unit itself is fixed to that part of the tool against which the cable is pressed.

It is also possible to have two or more blades. Given the designs shown in Figs. 8 and 13, the blades can be attached either to the "upper" or to the "lower" part of the clamping unit. The blade holder unit could also be attached to the central unit. Particularly if the blade holder is fixed to the central unit, the blade holder is advantageously attached in an elastic manner. For instance, the cutting unit may comprise one or two wheels or pairs of wheels which run on the cable. The elastic pressure element is used to guarantee the wheels are continuously pressed against the cable surface and so the blade is continuously cutting in the same height into the cable.

In summary, the present disclosure provides design concepts for centering all sizes of cables during the stripping operation. Generally, wheels shall be used to avoid using any flat or structured surfaces to be in contact with the cable like seen with many commercially available tools. Using wheels avoids the need for lubrication of the interface to the cable. Another aspect is that the cost and the weight of the clamping components should be limited. A further challenge is that small cables of down to 18 mm and large cables up to 60 mm are to be clamped with one tool.

As described above, the concepts provide options to symmetrically clamp light weight, small size tools around cables. The principles can be used for tools to strip the semicon layer requiring only low torques up to 3 Nm but need to strip down to 25 mm from the folded shield wires. The principles and some proposed modifications and/or additions would allow to build tools for jacket and insulation stripping.

As said above, the centering of the tool relative to the cable is particularly important once a motor is attached to the tool which spins it while the jointer holds the tool with one or two hands. The higher the number of revolutions is, the more important is a proper centering.

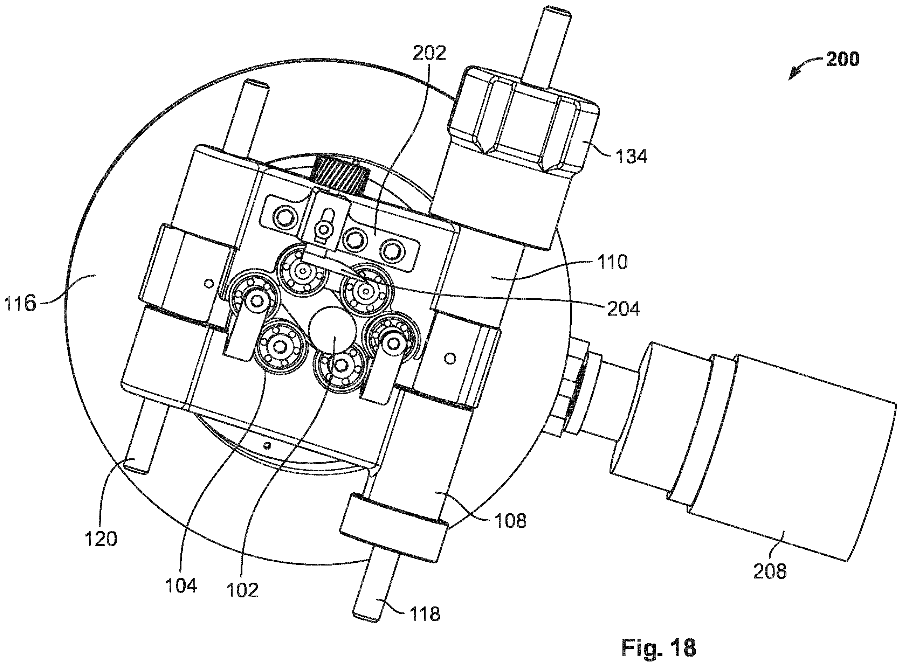

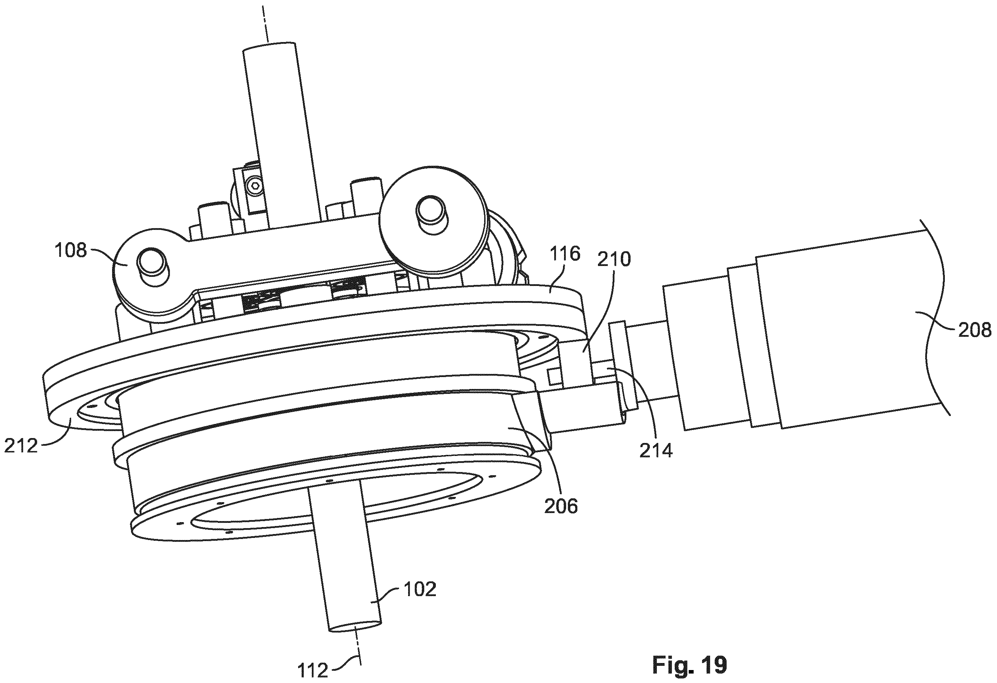

Figures 18 and 19 show an example of a motor driven cable preparation tool 200, which may comprise any of the above described clamping units 100. According to the present example, the clamping unit 100 essentially corresponds to the one shown in Figures 8 to 10. The description of the clamping unit 100 therefore will not be repeated now.

According to the example shown in Figures 18 and 19, the clamping unit 100 is further connected to a cutting unit 202 with a cutting blade 204. The position of the cutting blade 204 can be adjusted with respect to the cable's 102 outer diameter. In operation, the clamping unit 100 including the cutting unit 202 rotates around the cable 102 and is moveable with respect to a non-rotating base unit 206.

The cable preparation tool 200 comprises an electric motor 208 which acts as an impellent unit for moving the rotatable parts of the cable preparation tool 200 with respect to the base unit 206.

The motor 208 is radially oriented and positioned on the backside of the tool outside the boundaries of the cable clamping system. This is an example where the motor 208 together with its protective and clamping housing can be used as a handle for the tool 200. The size of the motor 208 (diameter e.g. 45 mm) and its length (e.g. 70 mm) together with the location so far away from the axis 112 allows them to be used as one of the handles to hold the tool 200. A second handle (not shown in the Figures) can be designed on the opposite side of the cable preparation tool 200 and may provide space for batteries on its inside. This is seen as an advantageous use of motor 208 and battery for providing the required handle(s) to hold the tool 200 during the spinning operation.

Handles may also be provided independently from the motor and the batteries. This alternative does not only provide more freedom for design features but makes it much easier to have handles attached in a flexible manner. Thus, a cable jointer may need to perform less care in holding the tool while operating along the cable. Rigidly attached handles bear the risk of tilting the tool while operating if the jointer does not follow with his hand(s) carefully.

To reduce cost and weight, a large size crown gear 212 is mounted to the clamping unit 100 of the tool 200 and may be made from thermoplastic material. The motor 208 drives a spur wheel 210 which engages with the crown gear 212 for rotating the clamping unit 100. The execution of the gears (straight or curved) may be chosen to reduce vibrations and noise. For instance, a large size crown gear 212 can be combined with a very small spur wheel 210, both having a straight gear design. Any other suitable transmission design may of course also be used.

In the shown example, the motor 208 is oriented in a manner that the drive axis 214 of the electric motor 208 is oriented radially towards the central axis 112. The mechanical equilibrium is easier to achieve with this geometric arrangement. The center of gravity of the motor including any transmission and the center of gravity of the clamping unit should be as close to each other as possible, ideally coinciding. Moreover, a high ratio of transmission can be achieved by means of the shown radial arrangement of the motor 208. As mentioned, this arrangement is also advantageous because the motor 208 can be integrated into a handle. However, the orientation of the motor 208 can also be chosen differently, in particular, when using smaller motors. Figure 19 shows the gear wheels only in schematic manner. The proportions however are demonstrating a viable option. The large gear ratio of about 1:7 as in this case is providing the advantage of allowing to use a smaller and lighter motor due to increased number of revolutions.

In general, the proposed concepts of the present disclosure provide MV and HV cable stripping tools which are modified such that a cable jointer does not need to spin these around the cable for executing the stripping operation. This will be done by an impellent built into the tool. The impellent may also be attached to the tool at a certain point of time during the stripping process or may not be attached if decided by the cable jointer. But it is seen as the main focus to have the impellent built into the cable preparation tool.

There may be advantageous examples of the tool where all spinning moves are motorized also those at the beginning when the setting takes place. However, it is preferred that the jointer does the initial turns of the tool which are required for testing proper clamping on the cable and for setting of the cutting blade to the right depth. So these are testing spins to confirm the settings. After this, the jointer activates the motor and the tool starts to spin and strip with the built-in motorization while the jointer just holds the tool to provide the counter torque.

Important requirements for the motorization of such a motorized or semi-automatic cable preparation tool are:
- Limited increase of weight versus the existing hand tools.
- Limited increase or preferably a reduction of the outer diameter of those parts of the tool which are spinning around the cable during the stripping operation. This is important as the spacing between the cables can be limited in case of 3-core cables or is cables come out of narrow outlets e.g. for switchgear connection.

Motorized cable preparation tools comprise two major parts: One that is static having the motor and being held by the jointer, and one that is rotatable. The rotating part holds the cutting blade and the clamping around the cable. It can be smaller in diameter than the first part. This still allows elements of the tool which are not spinning for executing the stripping such as the motor or batteries or handles to have larger extensions from the center line of the cable.
- The motor and any means to transmit the torque and/or change the number of revolutions per minute such as gears or belts need to be covered properly against the environment, ideally allowing the tool to fall into the mud or being exposed to dust and humidity.

The motor system of a cable preparation tool for stripping cables up to 60 mm diameter needs to allow the tool to spin depending on stripping task as follows when considering the torque values given in Figure 1:
- Stripping jacket or insulation (torque: up to 15 Nm; 60 revolutions/min.)
- Stripping semicon layer (torque: up to 3.0 Nm; 120 revolutions/min.)

Promising technologies for small size and low weight impellents are spring systems and electric motors.

One or more of a spring system may be built into the tool depending on torque requirements. Spring systems may have the advantage to not needing any gear or belt system to change number of revolutions. They also do not need any battery storage of electrical power as well as solutions for recharging and/or exchange. Before operation, the spring systems need to be rotated in opposite direction to store the required energy. However, due to the limited energy content of the spring system when not exceeding the space limitations of the cable preparation tool, electric motors are preferable impellents for self-spinning cable preparation tools.

Electric motors offer the advantage of the availability of an extremely wide range of sizes, torques and number of revolutions at relatively low cost and weight. In order to cope with the requirement for low overall weight it is appropriate to use a transmission system that reduce the torque of the motor while increasing its number of revolutions. Gears and belts are options for this. To reduce the weight of gears e.g. the large size gear can be made from proper polymeric/thermoplastic material while the smaller gear sitting on the motor shaft may be made from metal. Commercially available motors with low unit cost may have build-in gear boxes which further increase the transmission ratio favorably.

There are multiple options for the orientation and the location of a motor relative to the tool. Of course, more than one motor could be used for such tool. One criterion to decide about location and orientation of the motor is to reduce bending moments introduced into the clamping unit, e.g. if the motor is oriented in axial direction and located further away from the clamping unit. It is to be mentioned that the motor (or the motors) may be mounted onto the rotating clamping unit rather than on the non-rotating part which will be held by the cable jointer.

Furthermore, also hollow-shaft motors are an option as they spin slowly with relatively high torques. Due to size range of cables to be stripped, the shaft needs to have a bore of min. 65 mm to allow 60 mm cables to fit through. It is possible to attach the motors with their center axis aligned with that of the tool and the cable running through. It was found that motors suitable for the application would have a width of 60 mm. However, these motors are costly and thus, small standard motors with gear or belt transmission are preferable.

As described above, the proposed concepts provide options for impellents used for motorized cable stripping tools for MV and HV cables. The sizes of motor and battery can be that low that their housings could be used as handles. The cost of motors and gear system can be relatively low, e.g. using thermoplastic injection molding for the large size gear. The weight appears to add only little to the currently available tools, given options for weight reduction of the mechanical system are used such as design optimization and switching to hard aluminum rather than steel.

The proposed concepts are primarily designed for stripping MV and HV cables. The design concepts can be taken for LV cables as well.

**Reference Numerals:**

| **Reference Numeral** | **Description** |
|---|---|
| 1 | curve of torque vs. diameter for insulation layer |
| 2 | curve of torque vs. diameter for jacket layer |
| 3 | curve of torque vs. diameter for semicon layer |
| 100 | clamping unit |
| 102 | cable |
| 104 | wheel; roller |
| 105 | peripheral wheels |
| 106 | holder part |
| 108 | first support element |
| 110 | second support element |
| 112 | longitudinal axis of the cable; central axis of clamping unit |
| 114 | wheel axis; roller axis |
| 116 | central unit |
| 118 | first slide bearing shaft |
| 120 | second slide bearing shaft |
| 121 | bearing bushing |
| 122 | first thread |
| 124 | second thread |
| 126 | fixing element |
| 128 | actuation means |
| 130 | motor |
| 132 | bolt |
| 134 | cap |
| 136 | transmission ring |
| 138 | upper stop |
| 140 | compression spring |
| 142 | elongated holes |
| 144 | sliding means |
| 200 | cable preparation tool |
| 202 | cutting unit |
| 204 | cutting blade |
| 206 | base unit |
| 208 | electric motor; impellent unit |
| 210 | spur wheel |
| 212 | crown gear |
| 214 | drive axis; drive shaft |
| D1 | first wheel base |
| D2 | second wheel base |

## Claims

1. Clamping unit for a cable preparation tool (200), the clamping unit (100) being operable to encompass a cable (102) having a longitudinal axis (112), the clamping unit comprising:
a first support element (108) for axially supporting the cable (102) from a first direction across the longitudinal axis (112),
a second support element (110) for axially supporting the cable (102) from a second direction across the longitudinal axis (112),
a central unit (116) being interconnected with the first support element (108) and the second support element (110),
a linear slide bearing unit, the slide bearing unit connecting the first support element (108) and the second support element (110) movably to the central unit (116), so that they can be moved in parallel and simultaneously to change their distance with respect to the central unit.

2. Clamping unit according to claim 1, the linear slide bearing unit comprising two linear slide bearing shafts (118, 120) interconnecting the first support element (108), the second support element (110), and the central unit (116).

3. Clamping unit according to one of the claims 1 or 2, wherein the slide bearing unit comprises a drive element for moving the first support element (108) und the second support element (110) simultaneously across the longitudinal axis (112).

4. Clamping unit according to claim 2 and 3, wherein the first slide bearing shaft (118) forms a spindle and comprises a first thread (122) engaging with the first support element (108) and a second thread (124) engaging with the second support element (110).

5. Clamping unit according to claim 4, wherein the first slide bearing shaft (118) is rotatable around its longitudinal shaft axis and can be actuated by rotating a nut (134) attached to one end of the first slide bearing shaft (118).

6. Clamping unit according to claim 4, wherein the first slide bearing shaft (118) is rotatable around its longitudinal shaft axis and can be actuated via a gear set or a worm drive.

7. Clamping unit according to one of the preceding claims, wherein the first support element (108) and/or the second support element (110) comprise at least one roller (104) rotatable around a roller axis (114) extending along the longitudinal axis (112) of the cable for supporting the cable.

8. Clamping unit according to one of the preceding claims, wherein the first support element (108) and/or the second support element (110) comprise a plurality of rollers (104) distributed around the longitudinal axis (112) of the cable.

9. Clamping unit according to claim 8, wherein at least one of the plurality of rollers (104) at the first support element (108) and/or the second support element (110) is axially off-set from the other rollers (104) at the same support element and/or the other support element.

10. Clamping unit according to claim 9, wherein the plurality of rollers (104) on the first and/or second support element are arranged in pairs of rollers distanced apart in an axial direction, each pair of rollers being arranged at the same radial position with respect to the longitudinal axis of the cable.

11. Clamping unit according to claim 10, wherein at one of the first or second support element (108, 110) the individual rollers (104) of at least one pair of rollers (104) have a larger axial distance from each other than the individual rollers of the other pairs of rollers.

12. Cable preparation tool comprising a clamping unit (100) according to one of the preceding claims, the cable preparation tool (200) further comprising a cutting unit (202) attached to the clamping unit (100) and/or an impellent unit (208) for impelling the clamping unit of the cable preparation tool to rotate around the longitudinal axis of the cable.

13. Cable preparation tool according to claim 12, wherein the impellent unit comprises an electric motor (208).

14. Cable preparation tool according to claim 13, wherein the electric motor (208) is arranged on a base unit (206), which in operation is not rotating around the cable (102), and wherein the clamping unit (100) with the cutting unit(202) is connected to the base unit (206) by means of a transmission unit (210, 212).

15. Cable preparation tool according to claim 14, wherein the electric motor (208) has a drive shaft (214), which is rotating during operation, and wherein the electric motor (208) is oriented at the base unit (206) so that the drive shaft (214) extends across to the longitudinal axis (112) of the cable (102).
